(19)

(11) **EP 3 124 999 B1**

(12) # EUROPEAN PATENT SPECIFICATION

(45) Date of publication and mention of the grant of the patent:
**15.05.2019 Bulletin 2019/20**

(51) Int Cl.:
***G01S 19/54*** *(2010.01)*

(21) Application number: **15179140.7**

(22) Date of filing: **30.07.2015**

(54) **A METHOD AND APPARATUS FOR DETERMINING AN OBJECT HEADING**

VERFAHREN UND VORRICHTUNG ZUR BESTIMMUNG VON OBJECT HEADING

PROCÉDÉ ET APPAREIL PERMETTANT DE DÉTERMINER L'ANGLE DE CAP D'UN OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.02.2017 Bulletin 2017/05**

(73) Proprietor: **Rohde & Schwarz GmbH & Co. KG**
**81671 München (DE)**

(72) Inventor: **ZAHID, Imran**
**81673 München (DE)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**EP-A1- 2 624 013** **US-A- 5 506 588**
**US-A1- 2015 168 562**

- **VAN KAMPEN E ET AL: "Applied Interval Based Integer Ambiguity Resolution", NAVIGATION, INSTITUTE OF NAVIGATION, FAIRFAX, VA, US, vol. 56, no. 3, 1 December 2009 (2009-12-01), pages 205-219, XP056004582, ISSN: 0028-1522**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 124 999 B1

Printed by Jouve, 75001 PARIS (FR)

## Description

The invention relates to a method and apparatus for determining a heading of an object, in particular of a digital direction finding receiver.

Conventional systems for determining the heading of an object such as a vehicle or device, use sensors, in particular magnetometers or inertial sensors such as accelerometers or gyroscopes. However, these heading sensors require initialization and precise calibration before they can be used to remove drifts and scaling factors.

A global navigation satellite system, GNSS, such as the global positioning system, GPS, can be used to provide a heading of an object when the object is in motion. However, conventional GNSS-based systems using a single receiver and a single antenna do not work when the respective object is not moving. Further developed conventional systems describe the use of two GNSS antennas separated by a short distance in an attempt to overcome limitations of single antenna GNSS systems. These two antenna GNSS systems measure the difference in phase of a satellite signal as it is received by the two antennas to derive the position and/or heading of the object.

The global positioning system, GPS, is based on measurement of range between a user equipment and satellites. This range is measured by counting the signal travel time from the phase center of the satellite antenna to the phase center of the receiving antenna. The receiver can correlate a locally generated code with the received satellite signal to read the data content of the received satellite signal even when the satellite signal falls below the receiver's thermal noise.

The carrier phase is usually measured in number of cycles, wherein each cycle refers to the wavelength of the transmitted satellite carrier signal. In principle, one can replace the pseudo range with the carrier phase if one measures the total number of cycles from the satellite to the receiver and multiplies it by the wavelength $\lambda$ of the satellite carrier signal. However, since the satellite carrier signals are sinusoidal waves, all signal cycles look the same. The receiver has no means to track the start of the counter or when the receiver is switched on. GNSS receivers can measure the carrier phase down to fractions of a cycle accurately. However, the total integer number of carrier phases from the satellite remains unknown, also known as inter-ambiguity.

Carrier phase measurement is performed in comparison to a signal generated by a local oscillator of the receiver. Once the GPS signal is locked and demodulated, a phase comparison with the local clock signal provides the phase measurement. The receiver is capable of measuring a fractional phase (i.e. 0 to 1 $\lambda$) and an integer count within the measurement time. However, the whole number of cycles between the satellite and the receiver remains unknown. To overcome this integer ambiguity, conventional integer ambiguities resolution techniques have been proposed. A least square ambiguity decorrelation adjustment is used in conventional GNSS systems. However, these conventional integer ambiguity resolution techniques used in conventional GNSS systems consume a lot of data processing resources so that a relatively long calculation time is required to calculate the heading of the respective object. Such a conventional system may take more than five minutes to calculate the heading of an object during initialization. Moreover, if a satellite is lost or becomes unobservable, reinstallation is required resulting in a prolonged heading calculation. During this period, the heading of the respective physical object or device is not available.

US 5 506 588 A relates to an attitude determining system for use with a global positioning system and a laser range finder. US 2015/168562 A1 relates to system and methods for estimating attitude using double differenced GPS carrier phase instruments

Accordingly, it is an object of the present invention to provide a method and apparatus which allows to determine a heading of an object rapidly.

This object is achieved according to a first aspect of the present invention by a method comprising the features of claim 1.

The invention provides according to the first aspect of the present invention a method for determining a heading of an object comprising the steps of:

measuring carrier signal phases of satellite carrier signals received from a number of visible satellites on at least two antennas attached to said object and defining a baseline vector of said object with a predetermined baseline length,

calculating for each satellite carrier signal a carrier phase difference between the measured carrier signal phases of the satellite carrier signal received on the at least two antennas, wherein calculating the carrier phase difference includes removing a clock bias,

calculating projection curves of the baseline vector onto object satellite unit vectors for all visible satellites when rotating said baseline vector within a predetermined azimuth angle range, and

comparing extracted fractional parts of the calculated projection curves with extracted fractional parts of their corresponding fractional carrier phase differences to identify a common intersection for all visible satellites representing the heading of the respective object, wherein the calculated negative fractional parts of the projection curves are corrected by adding one wavelength of the respective satellite carrier signal to remove negative ambiguities.

An advantage of the method according to the first aspect of the present invention is that it requires a minimum of data processing resources and can be implemented easily on a digital signal processor, DSP.

In a possible embodiment of the method according to the first aspect of the present invention, a pitch angle of the baseline vector is kept constant while rotating said baseline vector within the predetermined azimuth angle range.

In a further possible embodiment of the method according to the first aspect of the present invention, the predetermined azimuth angle range is set in the range from 0 degrees to 360 degrees.

In a still further possible embodiment of the method according to the first aspect of the present invention, the common intersection in the azimuth angle range is identified by calculating absolute differences between the fractional parts of the carrier phase differences and the projection curves, summing up the calculated absolute differences for all visible satellites and determining a minimum of the calculated sum of absolute differences to identify the common intersection representing the heading of the respective object.

In a further possible embodiment of the method according to the first aspect of the present invention, several headings are determined on the basis of multiple reference satellite carrier signals received from different visible satellites at the same instance and compared to each other to estimate an accuracy of the determined headings.

In a further possible embodiment of the method according to the first aspect of the present invention, if the estimated accuracy of the determined headings is sufficient, an average value of the determined headings is calculated and output for further processing.

The invention further provides according to a second aspect an apparatus comprising the features of claim 7.

The invention provides according to the second aspect an apparatus comprising
a receiving unit having at least two GNSS antennas adapted to receive satellite signals from satellites; and
a processing unit configured to perform the method according to the first aspect of the present invention to determine a heading of an object.

The invention further provides according to a third aspect a direction finding device comprising the features of claim 8.

The invention provides according to the third aspect a direction finding device comprising an apparatus according to the second aspect of the present invention.

The invention further provides according to a fourth aspect a vehicle comprising the features of claim 9.

The invention provides according to the fourth aspect a vehicle comprising an apparatus according to the second aspect of the present invention configured to determine a heading of the respective vehicle.

The invention further provides according to a fifth aspect an antenna arrangement comprising the features of claim 10.

The invention provides according to the fifth aspect an antenna arrangement comprising an apparatus according to the second aspect of the present invention configured to determine a heading of the respective antenna arrangement.

In the following, possible embodiments of the different aspects of the present invention are described in more detail with reference to the enclosed figures.

Fig. 1 shows a flowchart of an exemplary embodiment of a method for determining a heading of an object according to the first aspect of the present invention;

Fig. 2 shows a block diagram of a possible exemplary embodiment of an apparatus for determining a heading of an object according to the second aspect of the present invention;

Fig. 3 shows a diagram for illustrating a scalar projection for a rotated baseline vector to illustrate the operation of a method and apparatus according to the present invention;

Fig. 4 shows calculated projection curves with a rotated baseline vector for several satellites in view to illustrate the operation of a method and apparatus according to the first and second aspect of the present invention;

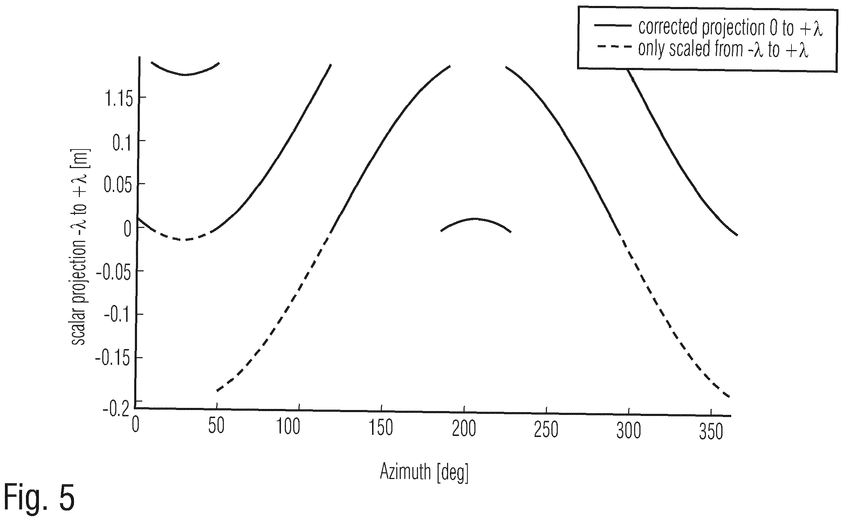

Fig. 5 shows a further diagram for illustrating a line of sight vector baseline scalar projection correction as performed in a possible embodiment of the method and apparatus according to the present invention;

Fig. 6 shows a diagram for illustrating a satellite elevation effect on the calculated projection curves;

Figs. 7, 8 illustrate an interferometric phase comparison as performed by the method and apparatus according to the first and second aspect of the present invention;

Fig. 9 shows a diagram for illustrating the absolute vertical difference from a high elevation satellite to illustrate the operation of a possible exemplary embodiment of the method and apparatus according to the first and second aspect of the present invention;

Fig. 10 shows the absolute vertical difference from a medium elevation satellite to illustrate the operation of a possible exemplary embodiment of the method and apparatus according to the first and second aspect of the present invention;

Figs. 11, 12 show diagrams to illustrate the reduction of a search space as performed in an exemplary embodiment of the method and apparatus according to the present invention;

Fig. 13 shows a flowchart of a possible exemplary embodiment of the method for determining a heading of an object according to the first aspect of the present invention;

Fig. 14 shows a block diagram of a possible exemplary direction finding device according to an aspect of the present invention employing the method for determining a heading of an object according to the first aspect of the present invention.

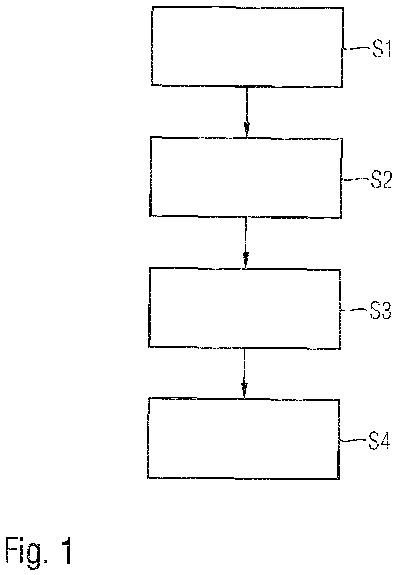

Fig. 1 shows a flowchart of an exemplary embodiment of a method for determining a heading of an object according to the first aspect of the present invention.

As can be seen in Fig. 1, in a first step S1 of the illustrated method, carrier signal phases of satellite carrier signals, SCS, received from a number N of visible satellites on at least two antennas $A_k$, $A_m$ are measured. The antennas can be attached to the respective object and define a baseline vector $\vec{b}$ of the object with a predetermined baseline length. The antennas can be formed by global navigation satellite system, GNSS, antennas. The baseline vector is a differential vector which can contain information of heading and elevation angles. The relative position or baseline vector is determined using carrier phase information. If two antennas $A_k$, $A_m$ are placed in a range of few meters as compared to distance from the satellite (about 20,000km) the unit vectors $e_k^p$, $e_m^p$ in the direction of satellite p for both antennas are approximately the same. The satellite carrier signals, SCS, are transmitted by satellites in predetermined frequency bands. For instance, the satellite carrier signals can be transmitted in the GPS system at 1,575.42MHz, the so-called L1 frequency band. The wavelength of this signal is approximately 19cm.

In a further step S2, for each received satellite carrier signal, SCS, a carrier phase difference between the measured carrier signal phases of the satellite carrier signal received on the at least two antennas $A_k$, $A_m$ is calculated.

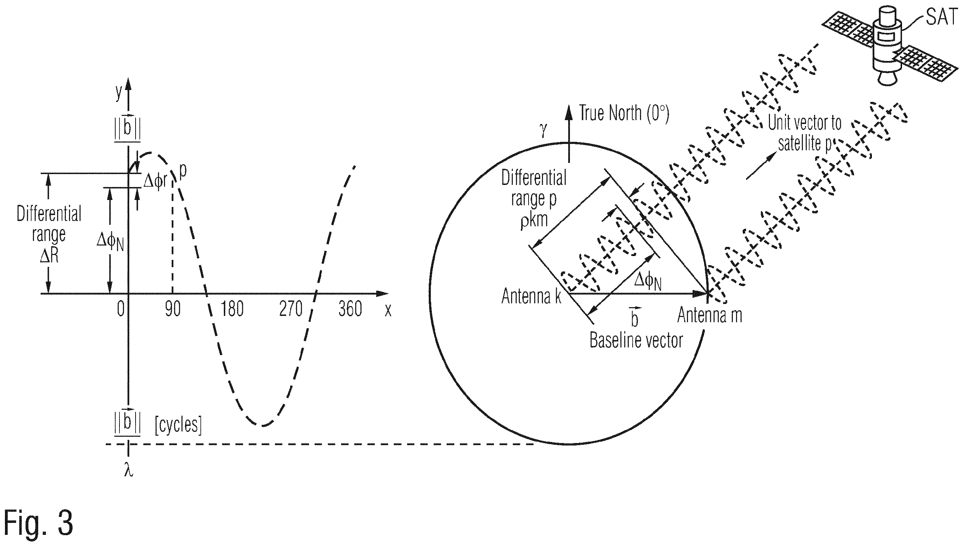

In a further step S3, projection curves, PC, of the baseline vector $\vec{b}$ onto object-satellite unit vectors for all visible satellites are calculated when rotating the baseline vector $\vec{b}$ within a predetermined azimuth angle range, AAR, or search space. This is illustrated in the diagram of Fig. 3.

The differential distance $\rho_{km}^p$ can be formed by the scalar projection of a baseline vector $\vec{b}$ onto the line of sight vector in the direction of the respective satellite p. If this differential distance is written as a multiple of N number of cycles, i.e. $\Delta\rho_{km}^p / \lambda$, then the differential distance can be written as a sum of its integral part and its fractional part:

$$\Delta\rho_{km}^p = \rho_N + \rho_f \quad ,$$

wherein

$\rho_N$ is an integer number of cycles of the scalar projection and

$\rho_f$ is the fractional part of the scalar projection.

As can be seen in Fig. 3, the unit vector $\hat{e}^p$ points to the respective satellite p. The baseline vector $\vec{b}$ is defined between a first antenna k and a second antenna m of the receiver. The baseline vector $\vec{b}$ is rotated within a predetermined azimuth angle range, AAR, of e.g. 0 to 360 degrees and a projection curve, PC, is calculated of the rotating baseline vector $\vec{b}$ onto the object-satellite unit vector $e^p$ as illustrated in Fig. 3. Fig. 3 shows on the left the generated projection curve, PC. The differential range $\rho_{km}^p$ is equal to a single carrier phase difference $\Delta\varphi_{km}^p$. The measured single difference carrier phase contains an ambiguous integer part and a fractional part. The measured single difference carrier phase $\Delta\varphi_{km}^p$ from satellite p can be written as:

$$\Delta\phi_{km}^p = \phi_N + \phi_f \quad ,$$

wherein

$\phi_N$ is the integer number of cycles of scalar projection measured as carrier phase differential and

$\phi_f$ is the fractional part of the scalar projection measured as carrier phase differential.

Although the number of integers N included in the phase difference measured by the receiver are ambiguous, the fractional part of the single difference carrier phase is the same as the fractional part of the computed scalar projection for the orientation of the baseline.

In a further step S4 of the method according to the first aspect of the present invention as illustrated in Fig. 1, the extracted fractional parts of the calculated projection curves, PC, are compared with extracted fractional parts of their corresponding fractional carrier phase differences to identify a common intersection for all visible satellites representing the heading, H, of the respective object.

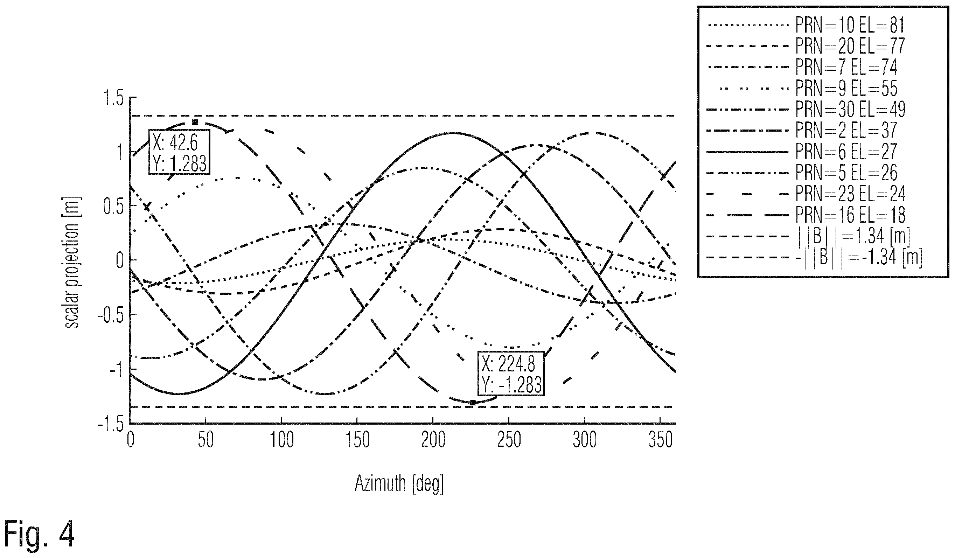

Fig. 4 illustrates line of sight, LOS, projection curves for a rotated baseline vector $\vec{b}$ for different visible satellites. In the illustrated example, the highest amplitude is observed for the satellite having an elevation angle of 18 degrees above the horizon. Fig. 4 shows a plot where the baseline vector $\vec{b}$ is rotated at a constant pitch of zero and having a baseline length of 1.34m within a predetermined azimuth angle range or search space ranging from 0 degrees to 360 degrees.

In the method according to the present invention, the negative projections are corrected by adding one wavelength ($\lambda$) of the respective satellite carrier signal, SCS, to remove negative ambiguities. In a preferred embodiment, the complete predetermined azimuth angle range, AAR, or search space comprises 360 degrees. In order to estimate the true heading of the object, this search space is reduced in a preferred embodiment as far as possible.

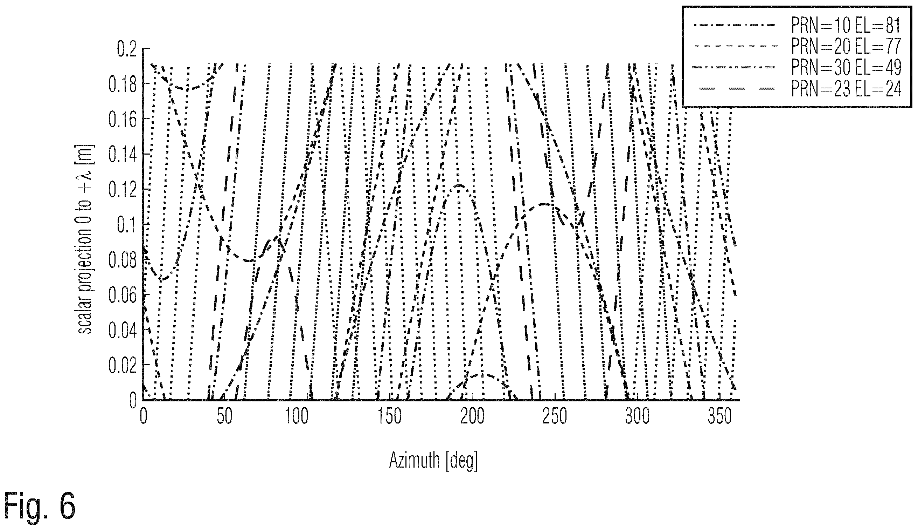

Fig. 6 illustrates a satellite elevation effect on the calculated projection curves, PC. It shows that the lower elevation satellites (PRN30 and PRN23) show more crowded curves in the search space due to their lower elevations. Fig. 6 shows the corrected fractional part of projections for four different satellites located at various elevations. The fractional phase differences after converting them from cycles to meters, range from 0 to 1$\lambda$ (i.e. 19cm for the L1 satellite signal). The calculated negative fractional parts of the projection curves, PCs, are corrected by adding one wavelength of the respective satellite carrier signal, SCS, to remove the negative ambiguities. Then, the measured signal difference phases are matched with the computed projection curves, PCs, in the respective search space or predetermined azimuth angle range, AAR. Due to unique orientation, the measured phase difference does only match at the correct azimuth of the baseline when keeping the pitch angle constant for all of the visible satellites.

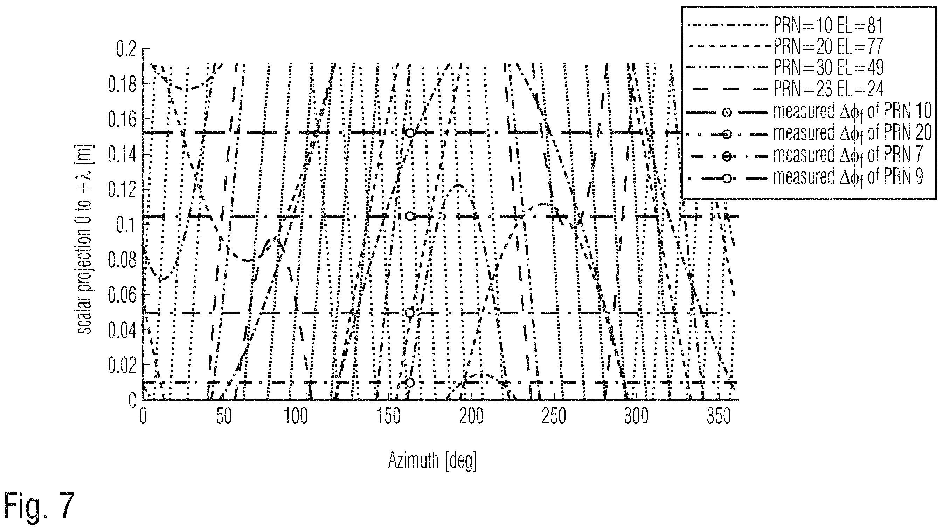

Fig. 7 shows the overlay of a single difference carrier phase and the projections for the same four satellites, wherein additionally horizontal lines are drawn for the measured phase differences. As can be seen in Fig. 7, the projection curve, PC, of the satellite PRN10 having an elevation angle of 81 degrees crosses the projection curve, PC, at three different points at around 165°, 250° and 307°. To reduce the search space one can observe the range around these points for the other visible satellites since it is evident that the heading must be around one of these three points in the search space.

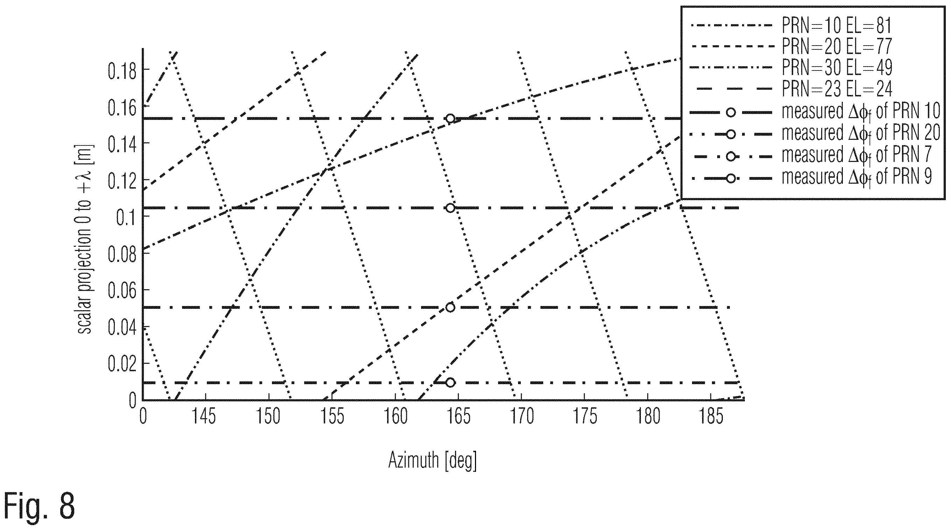

After further processing one can derive that all four phase differences do match very close at 164 degrees and that the same close match does never occur otherwise. After collecting these close matches, in a possible embodiment, an average is calculated from the estimated headings and output as the heading of the respective object. Fig. 8 illustrates this interferometric phase comparison to derive the heading at the intersection of 164° in the given example. If the clock bias is removed, the measured fractional carrier phase differences do match the fractional parts of the projection curves, PCs, only at the correct azimuth angle, i.e. the searched heading. In a possible embodiment, this common intersection in the azimuth angle range, AAR, or search space is identified by calculating the absolute differences between the fractional parts of the carrier phase differences and the projection curves, PCs, and then summing up the calculated absolute differences for all visible satellites and determining a minimum of the calculated sum of the absolute differences to identify the common intersection representing the heading of the respective object. The computation of the absolute vertical differences between the measured phase and the projection curve, PC, can be performed for the full searched spectrum for each individual double difference phase and its respective double difference projection curve.

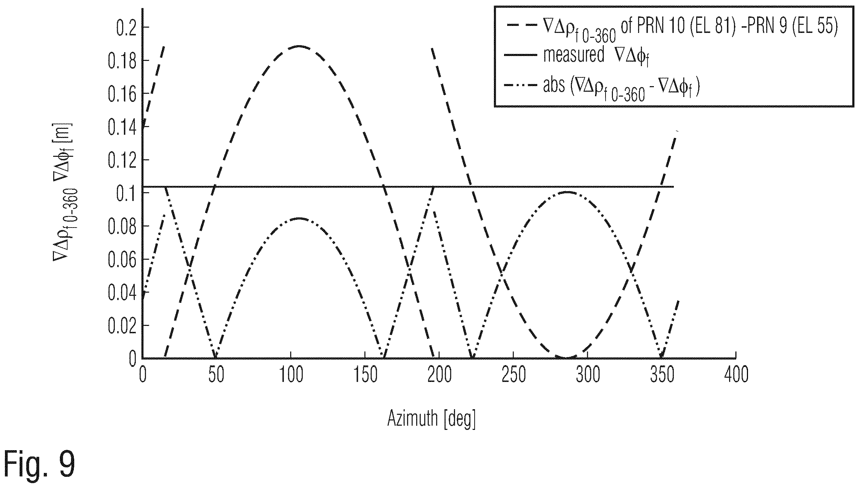

Fig. 9 illustrates the absolute vertical difference for a high elevation satellite. As can be seen in Fig. 9, the projection curve, PC, intersects a measured double difference for the complete azimuth spectrum at four points, i.e. near 50°, 165°, 225° and 350°. This means that the looked for heading is in either of these four regions $\pm$3°. Although, due to the slow movement of the high satellite projection curve there is not a high resolution versus heading in the azimuth spectrum, this can be overcome since there are enough satellites to look at. It is possible to observe the same absolute vertical difference for a lower elevation satellite.

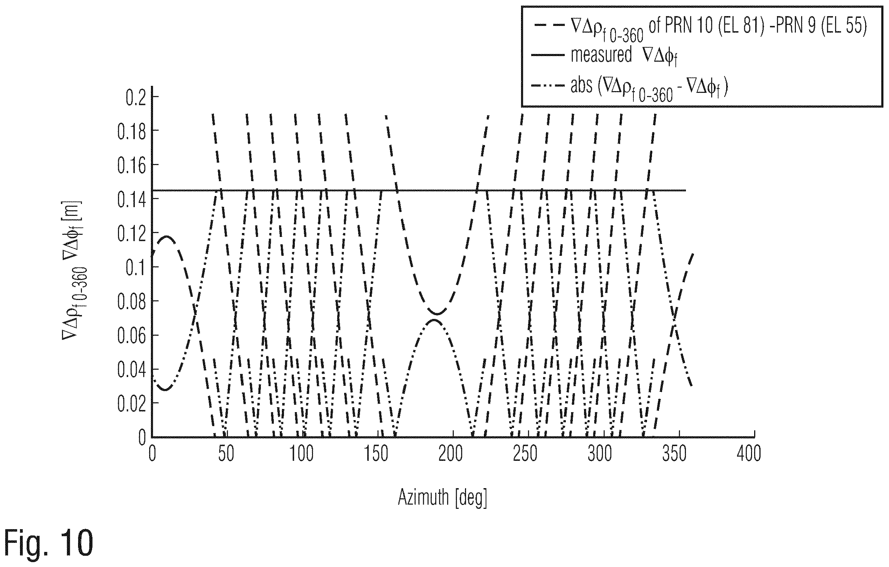

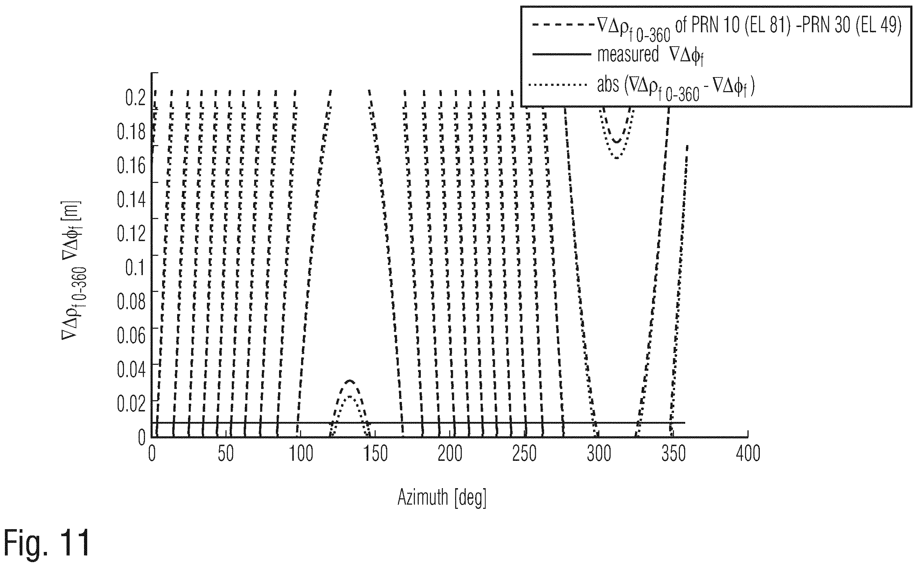

Fig. 10 illustrates the absolute vertical difference for a medium elevation satellite. As can be seen in Fig. 10, the double difference projection from the satellite having a 55° elevation intersects with the measured double difference phase at fourteen different points, but with two points in common with the satellite providing the curve illustrated in Fig. 9, i.e. at 50° and 165°. This means that the search space has already been reduced to two points by observing only two satellites. By including a third satellite it is possible to reduce the search space further to just one point as illustrated in Fig. 11.

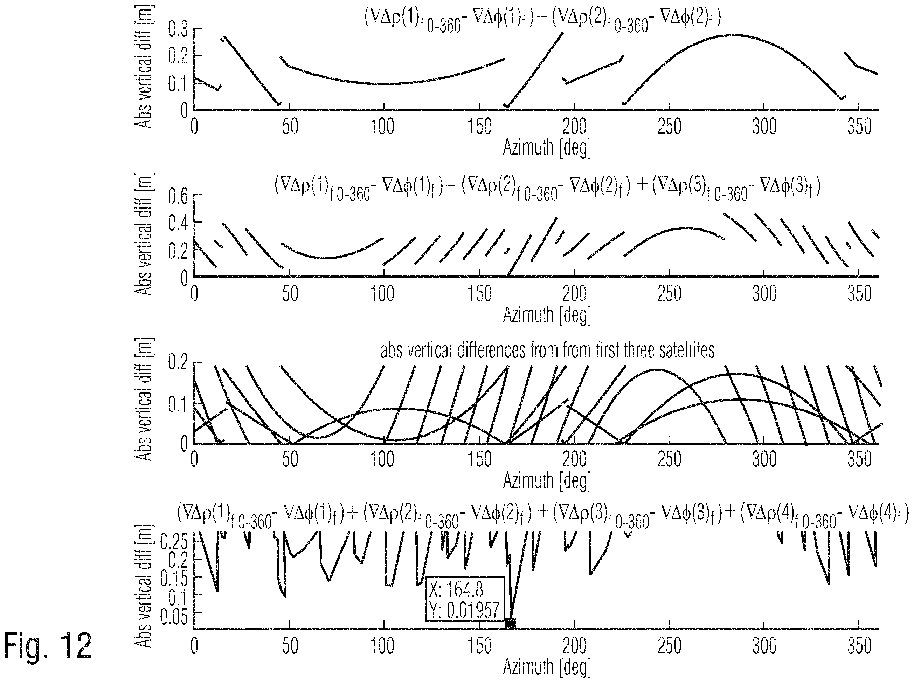

If all absolute vertical differences are summed up and the minimum points are identified, it is possible to estimate the true heading from North. Fig. 12 illustrates this procedure. It depends on the geometrical position of the satellites to specify how many satellites are required to provide the heading of the object. The length of the baseline vector $\vec{b}$ can also contribute significantly to reduce the search space. As demonstrated by using only signals from three visible satellites, it is possible to reduce the search space to one single heading. It is possible to improve the heading estimation by using more satellites.

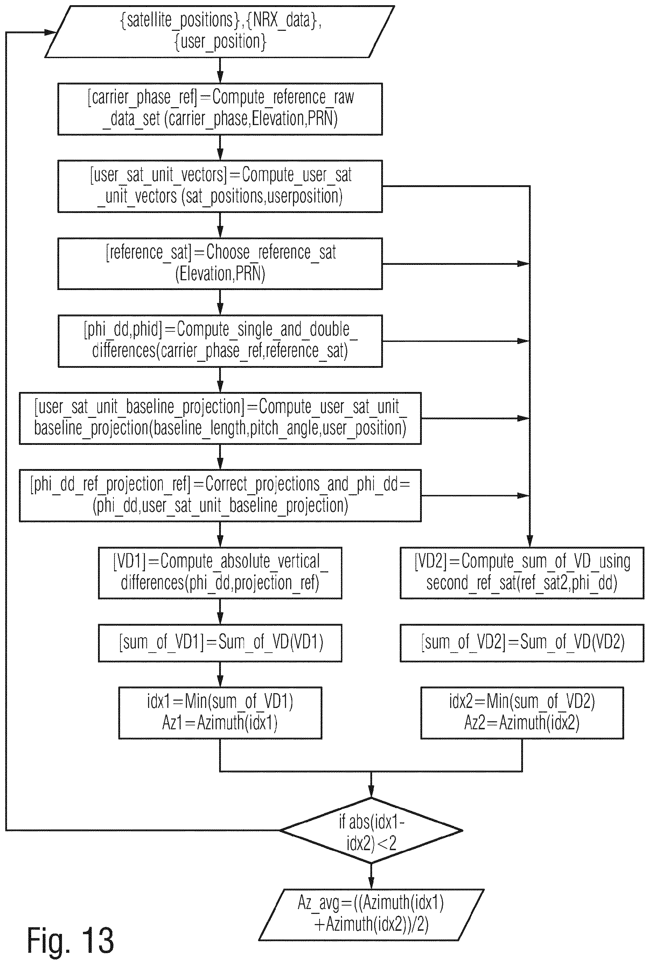

Fig. 13 shows a flowchart of an exemplary embodiment of the method according to the first aspect of the present invention. In the illustrated embodiment, RNX data received by a receiver contains carrier phase measurements and the user position of the respective user equipment or object. The carrier phase reference raw data is computed from the carrier phase and the elevation angle of the respective satellite. Then, the user satellite unit vectors e are computed from the positions of the satellites and the user position. In a further step, a reference satellite is selected depending on the elevation angles of the satellites. In a further step, single and double phase differences are computed. For each satellite carrier signal, SCS, a carrier phase difference is calculated between the measured carrier signal phases of the satellite carrier signal received on the at least two antennas of the receiver. The calculated carrier phase differences can be single carrier phase differences calculated from the same received satellite carrier signal and/or double carrier phase differences calculated by subtracting two single carrier phase differences and keeping one of them as a reference single carrier phase difference.

In a further step, the projection curves, PCs, of the baseline vector $\vec{b}$ are calculated on the object-satellite unit vectors e for all visible satellites when rotating the baseline vector $\vec{b}$ within the predetermined search space, AAR. After this, corrections are performed and finally, the extracted fractional parts of the calculated projection curves, PCs, are compared with extracted fractional parts of their corresponding fractional carrier phase differences using different reference satellites to identify a common intersection for all visible satellites representing the heading of the object. In the flowchart shown in Fig. 13, use of only two different reference satellites is illustrated, however, the number of employed reference satellites can be higher.

The calculated azimuth angles or headings can be determined on the basis of satellite carrier signals, SCS received from different visible satellites at the same instance and compared to each other to estimate an accuracy of the determined headings. In the illustrated exemplary embodiment of Fig. 13, if the calculated heading or azimuth angle Az1 within a first reference satellite is close to the azimuth angle Az2 or heading calculated by using another second satellite as a reference satellite, then it is decided that the estimated accuracy of the determined headings is sufficient. The calculated headings Az1, Az2 can be subtracted and if their absolute difference is less than a configurable threshold value it is determined that the estimated accuracy of the determined headings is sufficient. If the estimated accuracy is determined to be sufficient, in a possible embodiment as illustrated in Fig. 13, an average value Az_avg of the determined headings can be calculated and output at the heading of the object for further processing.

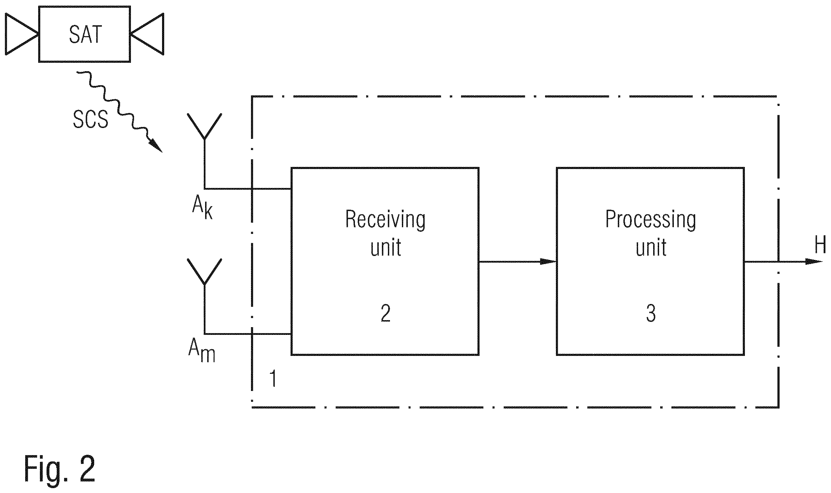

Fig. 2 shows a block diagram of a possible exemplary embodiment of an apparatus 1 according to the second aspect of the present invention. As shown in Fig. 2, the apparatus 1 comprises a receiving unit or receiver 2 and a processing unit 3. The receiving unit 2 comprises at least two GNSS antennas to receive satellite signals from different visible satellites, SAT. The processing unit 3 is configured to perform the method according to the first aspect of the present invention as illustrated in Fig. 1. The processing unit 3 can comprise a digital signal processor DSP adapted to calculate the heading of the object and to output the calculated heading, H, to a further application program executed on the same or a different apparatus.

In a possible embodiment, the apparatus 1 according to the present invention can be integrated in a direction finding device.

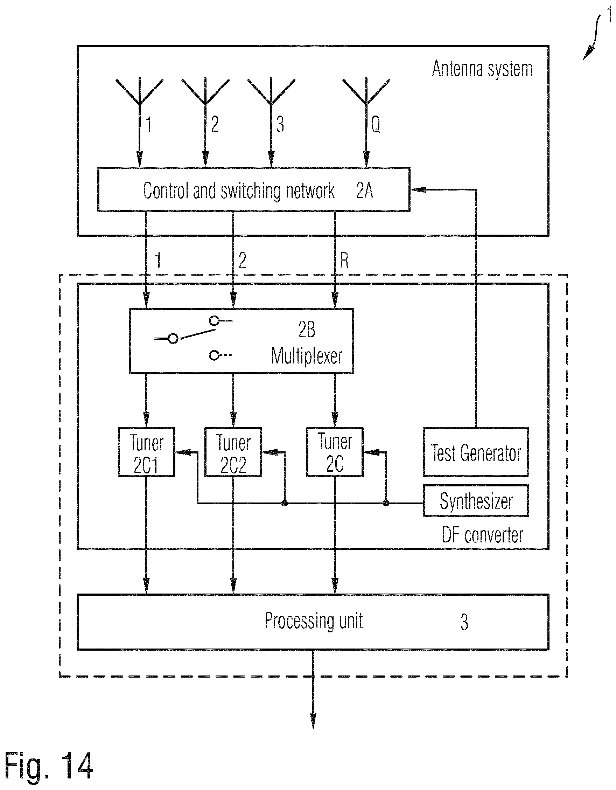

Fig. 14 shows a block diagram of a possible exemplary embodiment of a direction finding device which can employ the method according to the first aspect of the present invention. An antenna system comprising several (Q) antennas is connected via a control and switching network 2A of the receiver 2 to a multiplexer 2B providing T signals to frequency tuners 2C-i connected to a local synthesizer. The received signals are supplied to the processing unit 3 of the apparatus 1 as shown in Fig. 14. The processing unit 3 can calculate the heading of the direction finding, DF, device by performing the method according to the present invention as illustrated in Fig. 1 and output the current calculated own heading, H, of the direction finding device to a further application program of the direction finding device which uses the calculated own heading, H, of the direction finding device as input for calculating the heading of a transmitting source or transmitter relative to the direction finding device as illustrated in Fig. 14.

The method for determining a heading, H, of an object can be used to determine the heading of any object or platform. This object can be either moving or located at a fixed position. In a possible embodiment, the method and apparatus are configured to determine the heading of a moving object, in particular a vehicle. This vehicle can be a car, a truck, a train or a ship.

In a further possible embodiment, the method and apparatus according to the first and second aspect of the present invention can be used to determine the heading of an antenna arrangement. These antenna arrangements are mostly installed at fixed locations. For instance, these antenna arrangements can comprise several antenna elements separated in a circle forming a diameter with several meters. For example, an antenna arrangement can comprise nine cross-looped antenna elements out of which a reference antenna needs to be aligned with the True North heading. The heading, H, determined by the method and apparatus according to the present invention can be output to align such an antenna arrangement.

The method and apparatus according to the present invention provide significant advantages over conventional ways to estimate heading. The method and apparatus according to the present invention require relatively few data processing resources and can calculate or determine the heading, H, very fast within less than one second. A further advantage of the method and apparatus according to the present invention resides in that it can be used for any kind of object, independently whether it is moving or fixed at a constant location. The method according to the present invention can be implemented within a digital signal processor, DSP, of a device. A further advantage of the method and system according to the present invention is that it can use any kind of satellite signals from the same or different global navigation satellite system GNSS. A further advantage of the method and system according to the present invention is that it allows to estimate the accuracy of the determined heading, H, and to use only a determined heading with sufficient accuracy for the respective application. The method and apparatus according to the present invention provides a very reliable heading value of the respective object within a very brief determination time of less than possibly one second for any kind of object without the need of any kind of sensor data besides the received satellite signals.

## Claims

1. A method for determining a heading, H, of an object, the method comprising the steps of:

   (a) measuring (S1) carrier signal phases of satellite carrier signals, SCS, received from a number, N, of visible satellites on at least two antennas attached to said object and defining a baseline vector of said object with a predetermined baseline length;
   (b) calculating (S2) for each satellite carrier signal, SCS, a carrier phase difference between the measured carrier signal phases of the satellite carrier signal, SCS, received on the at least two antennas, wherein calculating the carrier phase difference includes removing a clock bias;
   (c) calculating (S3) projection curves of the baseline vector onto object satellite unit vectors for all visible satellites when rotating said baseline vector within a predetermined azimuth angle range, AAR; and
   (d) comparing (S4) extracted fractional parts of the calculated projection curves with extracted fractional parts of their corresponding fractional carrier phase differences to identify a common intersection for all visible satellites representing the heading, H, of said object,

   **characterized in that** the calculated negative fractional parts of the projection curves are corrected by adding one wavelength of the respective satellite carrier signal, SCS, to remove negative ambiguities.

2. The method according to claim 1, wherein a pitch angle of said baseline vector is kept constant while rotating said baseline vector within the predetermined azimuth angle range, AAR.

3. The method according to claim 1 or 2, wherein the predetermined azimuth angle range, AAR, is set to 0 degrees to 360 degrees.

4. The method according to one of the preceding claims 1 to 3, wherein the common intersection in the azimuth angle range, AAR, is identified by

   - calculating absolute differences between the fractional parts of the carrier phase differences and the projection curves,
   - summing up the calculated absolute differences for all visible satellites and
   - determining a minimum of the calculated sum of the absolute differences to identify said common intersection representing the heading, H, of said object.

5. The method according to one of the preceding claims 1 to 4, wherein several headings, $H_i$, are determined on the basis of multiple satellite carrier signals, SCS, received from different visible satellites at the same instance and compared to each other to estimate an accuracy of the determined headings.

6. The method according to claim 5, wherein if the estimated accuracy of the determined headings is sufficient, an average value of the determined headings is output for further processing.

7. An apparatus (1) comprising:

   (a) a receiving unit (2) having at least two global navigation satellite system, GNSS, antennas adapted to receive satellite signals from satellites; and
   (b) a processing unit (3) configured to perform the method according to one of the preceding claims 1 to 8 to determine a heading, H, of an object.

8. A direction finding device comprising the apparatus according to claim 7.

9. A vehicle comprising the apparatus according to claim 7 configured to determine a heading of said vehicle.

10. An antenna arrangement comprising the apparatus according to claim 7 configured to determine a heading of said antenna arrangement.

## Patentansprüche

1. Verfahren zum Bestimmen einer Bewegungsrichtung (H) eines Objekts, wobei das Verfahren folgende Schritte umfasst:

(a) Messen (S1) von Trägersignalphasen von Satellitenträgersignalen (SCS), die von einer Anzahl (N) sichtbarer Satelliten auf mindestens zwei Antennen empfangen werden, die an dem Objekt angebracht sind, und einen Basisvektor des Objekts mit einer vorgegebenen Basislänge definieren;
(b) Berechnen (S2), für jedes Satellitenträgersignal (SCS), einer Trägerphasendifferenz zwischen den gemessenen Trägersignalphasen des Satellitenträgersignals (SCS), das auf den mindestens zwei Antennen empfangen wurde, wobei das Berechnen der Trägerphasendifferenz das Entfernen einer Taktverzerrung enthält;
(c) Berechnen (S3) von Projektionskurven des Basisvektors auf Objektsatelliteneinheitsvektoren für alle sichtbaren Satelliten, wenn der Basisvektor innerhalb eines vorgegebenen Azimutwinkelbereichs (AAR) gedreht wird; und
(d) Vergleichen (S4) extrahierter Bruchteile der berechneten Projektionskurven mit extrahierten Bruchteilen ihrer entsprechenden fraktionalen Trägerphasendifferenzen, um eine gemeinsame Überschneidung für alle sichtbaren Satelliten zu identifizieren, die die Bewegungsrichtung (H) des Objekts darstellt,

**dadurch gekennzeichnet, dass** die berechneten negativen Bruchteile der Projektionskurven korrigiert werden, indem eine Wellenlänge des jeweiligen Satellitenträgersignals (SCS) addiert wird, um negative Uneindeutigkeiten zu entfernen.

**2.** Verfahren nach Anspruch 1, wobei ein Anstellwinkel des Basisvektors konstant gehalten wird, während der Basisvektor innerhalb des vorgegebenen Azimutwinkelbereichs (AAR) gedreht wird.

**3.** Verfahren nach Anspruch 1 oder 2, wobei der vorgegebene Azimutwinkelbereich (AAR) auf 0 Grad bis 360 Grad eingestellt wird.

**4.** Verfahren nach einem der vorangehenden Ansprüche 1 bis 3, wobei die gemeinsame Überschneidung in dem Azimutwinkelbereich (AAR) identifiziert wird durch:

Berechnen absoluter Differenzen zwischen den Bruchteilen der Trägerphasendifferenzen und den Projektionskurven,
Summieren der berechneten absoluten Differenzen für alle sichtbaren Satelliten, und
Bestimmen eines Minimums der berechneten Summe der absoluten Differenzen, um die gemeinsame Überschneidung zu identifizieren, die die Bewegungsrichtung (H) des Objekts darstellt.

**5.** Verfahren nach einem der vorangehenden Ansprüche 1 bis 4, wobei mehrere Bewegungsrichtungen ($H_i$) auf der Basis mehrerer Satellitenträgersignale (SCS) bestimmt werden, die im selben Moment von verschiedenen sichtbaren Satelliten empfangen und miteinander verglichen werden, um eine Genauigkeit der bestimmten Bewegungsrichtungen zu schätzen.

**6.** Verfahren nach Anspruch 5, wobei, falls die geschätzte Genauigkeit der bestimmten Bewegungsrichtungen ausreichend ist, ein Durchschnittswert der bestimmten Bewegungsrichtungen zur Weiterverarbeitung ausgegeben wird.

**7.** Vorrichtung (1), umfassend:

(a) eine Empfangenseinheit (2), die mindestens zwei Global Navigation Satellite System (GNSS)-Antennen hat, die dafür ausgelegt sind, Satellitensignale von Satelliten zu empfangen; und
(b) eine Verarbeitungseinheit (3), die dafür ausgestaltet ist, das Verfahren nach einem der vorangehenden Ansprüche 1 bis 8 auszuführen, um eine Bewegungsrichtung (H) eines Objekts zu bestimmen.

**8.** Richtungsfeststellungsvorrichtung, die die Vorrichtung nach Anspruch 7 umfasst.

**9.** Fahrzeug, das die Vorrichtung nach Anspruch 7 umfasst, die dafür ausgestaltet ist, eine Bewegungsrichtung des Fahrzeugs zu bestimmen.

**10.** Antennenanordnung, die die Vorrichtung nach Anspruch 7 umfasst, die dafür ausgestaltet ist, eine Bewegungsrichtung der Antennenanordnung zu bestimmen.

## Revendications

**1.** Procédé de détermination d’un cap, H (*heading*), d’un objet, le procédé comprenant les étapes consistant à :

(a) mesurer (S1) des phases de signaux de porteuses de signaux de porteuses de satellites, SCS (*satellite carrier signals*), reçus en provenance d’un nombre, N, de satellites visibles sur au moins deux antennes attachées audit objet et définir un vecteur de référence dudit objet, ayant une longueur de référence prédéterminée ;
(b) calculer (S2) pour chaque signal de porteuse de satellite, SCS, une différence de phase de porteuse entre les phases de signal de porteuse mesurées du signal de porteuse de satellite, SCS, reçu sur les au moins deux antennes, dans lequel le calcul de la différence de phase de porteuse inclut la suppression d'un biais d'horloge ;
(c) calculer (S3) des courbes de projection du vecteur de référence sur des vecteurs unitaires de satellites d'objet pour tous les satellites visibles lors de la rotation dudit vecteur de référence à l'intérieur d'une plage d'angles d'azimut prédéterminée, AAR (*azimuth angle range*) ; et
(d) comparer (S4) des parties fractionnaires extraites des courbes de projection calculées à des parties fractionnaires extraites de leurs différences de phase de porteuse fractionnaires correspondantes pour identifier une intersection commune pour tous les satellites visibles représentant le cap, H, dudit objet,

**caractérisé en ce que** les parties fractionnaires négatives calculées des courbes de projection sont corrigées par ajout d'une longueur d'onde du signal de porteuse de satellite respectif, SCS, pour éliminer des ambiguïtés négatives.

**2.** Procédé selon la revendication 1, dans lequel un angle d'inclinaison longitudinale dudit vecteur de référence est maintenu constant, tandis que ledit vecteur de référence est mis en rotation à l'intérieur de ladite plage d'angles d'azimut prédéterminée, AAR.

**3.** Procédé selon la revendication 1 ou 2, dans lequel la plage d'angles d'azimut prédéterminée, AAR, est définie pour aller de 0 degré à 360 degrés.

**4.** Procédé selon l'une des revendications 1 à 3 précédentes, dans lequel l'intersection commune dans la plage d'angles d'azimut, AAR, est identifiée par :

- calcul de différences absolues entre les parties fractionnaires des différences de phase de porteuses et des courbes de projection,
- addition des différences absolues calculées pour tous les satellites visibles et
- détermination d'un minimum de la somme calculée des différences absolues pour identifier ladite intersection commune représentant le cap, H, dudit objet.

**5.** Procédé selon l'une des revendications 1 à 4 précédentes, dans lequel plusieurs caps, $H_i$, sont déterminés sur la base de multiples signaux de porteuses de satellites, SCS, reçus en provenance de différents satellites visibles à la même instance et comparés les uns aux autres pour estimer une exactitude des caps déterminés.

**6.** Procédé selon la revendication 5, dans lequel si l'exactitude estimée des caps déterminés est suffisante, une valeur moyenne des caps déterminés est délivrée à des fins de traitement ultérieur.

**7.** Appareil (1) comprenant :

(a) une unité de réception (2) comportant au moins deux antennes de système mondial de navigation par satellite, GNSS (*global navigation satellite system*), destinée à recevoir des signaux satellitaires en provenance de satellites ; et
(b) une unité de traitement (3) conçue pour mettre en oeuvre le procédé selon l'une des revendications 1 à 8 précédentes afin de déterminer un cap, H, d'un objet.

**8.** Dispositif radiogoniométrique comprenant l'appareil selon la revendication 7.

**9.** Véhicule comprenant l'appareil selon la revendication 7 conçu pour déterminer un cap dudit véhicule.

**10.** Agencement d'antennes comprenant l'appareil selon la revendication 7 conçu pour déterminer un cap dudit agencement d'antennes.

S1
S2
S3
S4

Fig. 1

SAT
SCS
$A_k$
$A_m$
1
Receiving unit
2
Processing unit
3
H

Fig. 2

SAT
Unit vector to satellite p
True North (0°)
γ
Differential range p ρkm
Antenna k
Antenna m
ΔΦN
b
Baseline vector
y
||b||
Differential range ΔR
ΔΦN
ΔΦr
p
0
90
180
270
360
x
||b||
[cycles]
λ

Fig. 3

PRN=10 EL=81
PRN=20 EL=77
PRN=7 EL=74
PRN=9 EL=55
PRN=30 EL=49
PRN=2 EL=37
PRN=6 EL=27
PRN=5 EL=26
PRN=23 EL=24
PRN=16 EL=18
||B||=1.34 [m]
-||B||=-1.34 [m]
X: 42.6
Y: 1.283
X: 224.8
Y: -1.283
scalar projection [m]
Azimuth [deg]
1.5
1
0.5
0
-0.5
-1
-1.5
0
50
100
150
200
250
300
350


Fig. 4

corrected projection 0 to +λ
only scaled from -λ to +λ
scalar projection -λ to +λ [m]
1.15
0.1
0.05
0
-0.05
-0.1
-0.15
-0.2
0
50
100
150
200
250
300
350
Azimuth [deg]

Fig. 5

PRN=10 EL=81
PRN=20 EL=77
PRN=30 EL=49
PRN=23 EL=24
scalar projection 0 to +λ [m]
0.2
0.18
0.16
0.14
0.12
0.1
0.08
0.06
0.04
0.02
0
0
50
100
150
200
250
300
350
Azimuth [deg]

Fig. 6

PRN=10 EL=81
PRN=20 EL=77
PRN=30 EL=49
PRN=23 EL=24
measured Δφ of PRN 10
measured Δφ of PRN 20
measured Δφ of PRN 7
measured Δφ of PRN 9
scalar projection 0 to +λ [m]
0.2
0.18
0.16
0.14
0.12
0.1
0.08
0.06
0.04
0.02
0
0
50
100
150
200
250
300
350
Azimuth [deg]

Fig. 7

PRN=10 EL=81
PRN=20 EL=77
PRN=30 EL=49
PRN=23 EL=24
measured Δφf of PRN 10
measured Δφf of PRN 20
measured Δφf of PRN 7
measured Δφf of PRN 9
scalar projection 0 to +λ [m]
0
0.02
0.04
0.06
0.08
0.1
0.12
0.14
0.16
0.18
Azimuth [deg]
145
150
155
160
165
170
175
180
185


Fig. 8

∇Δρf 0-360 of PRN 10 (EL 81) -PRN 9 (EL 55)
measured ∇Δφf
abs (∇Δρf 0-360 - ∇Δφf)
0.2
0.18
0.16
0.14
0.12
0.1
0.08
0.06
0.04
0.02
0
∇Δρf 0-360 ∇Δφf [m]
0
50
100
150
200
250
300
350
400
Azimuth [deg]


Fig. 9

$\nabla\Delta\rho_{f\,0\text{-}360}$ of PRN 10 (EL 81) -PRN 9 (EL 55)
measured $\nabla\Delta\phi_f$
abs ($\nabla\Delta\rho_{f\,0\text{-}360}$ - $\nabla\Delta\phi_f$)
$\nabla\Delta\rho_{f\,0\text{-}360}$ $\nabla\Delta\phi_f$ [m]
0.2
0.18
0.16
0.14
0.12
0.1
0.08
0.06
0.04
0.02
0
0
50
100
150
200
250
300
350
400
Azimuth [deg]

Fig. 10

$\nabla\Delta\rho_{f\,0\text{-}360}$ of PRN 10 (EL 81) -PRN 30 (EL 49)
measured $\nabla\Delta\phi_f$
abs ($\nabla\Delta\rho_{f\,0\text{-}360} - \nabla\Delta\phi_f$)
Azimuth [deg]
$\nabla\Delta\rho_{f\,0\text{-}360}\ \nabla\Delta\phi_f$ [m]
0
50
100
150
200
250
300
350
400
0.02
0.04
0.06
0.08
0.1
0.12
0.14
0.16
0.18
0.2

Fig. 11

(∇Δρ(1)f 0-360- ∇Δϕ(1)f) + (∇Δρ(2)f 0-360- ∇Δϕ(2)f)
Abs vertical diff [m]
0.3
0.2
0.1
0
0
50
100
150
200
250
300
350
Azimuth [deg]
(∇Δρ(1)f 0-360- ∇Δϕ(1)f) + (∇Δρ(2)f 0-360- ∇Δϕ(2)f) + (∇Δρ(3)f 0-360- ∇Δϕ(3)f)
Abs vertical diff [m]
0.6
0.4
0.2
0
0
50
100
150
200
250
300
350
Azimuth [deg]
abs vertical differences from from first three satellites
Abs vertical diff [m]
0.2
0.1
0
0
50
100
150
200
250
300
350
Azimuth [deg]
(∇Δρ(1)f 0-360- ∇Δϕ(1)f) + (∇Δρ(2)f 0-360- ∇Δϕ(2)f) + (∇Δρ(3)f 0-360- ∇Δϕ(3)f) + (∇Δρ(4)f 0-360- ∇Δϕ(4)f)
Abs vertical diff [m]
0.25
0.2
0.15
0.1
0.05
X: 164.8
Y: 0.01957
0
50
100
150
200
250
300
350
Azimuth [deg]


Fig. 12

{satellite_positions},{NRX_data},
{user_position}
[carrier_phase_ref]=Compute_reference_raw_data_set (carrier_phase,Elevation,PRN)
[user_sat_unit_vectors]=Compute_user_sat_unit_vectors (sat_positions,userposition)
[reference_sat]=Choose_reference_sat (Elevation,PRN)
[phi_dd,phid]=Compute_single_and_double_differences(carrier_phase_ref,reference_sat)
[user_sat_unit_baseline_projection]=Compute_user_sat_unit_baseline_projection(baseline_length,pitch_angle,user_position)
[phi_dd_ref_projection_ref]=Correct_projections_and_phi_dd=(phi_dd,user_sat_unit_baseline_projection)
[VD1]=Compute_absolute_vertical_differences(phi_dd,projection_ref)
[VD2]=Compute_sum_of_VD_using second_ref_sat(ref_sat2,phi_dd)
[sum_of_VD1]=Sum_of_VD(VD1)
[sum_of_VD2]=Sum_of_VD(VD2)
idx1=Min(sum_of_VD1)
Az1=Azimuth(idx1)
idx2=Min(sum_of_VD2)
Az2=Azimuth(idx2)
if abs(idx1-idx2)<2
Az_avg=((Azimuth(idx1)+Azimuth(idx2))/2)

Fig. 13

1
Antenna system
1
2
3
Q
Control and switching network 2A
1
2
R
2B
Multiplexer
Tuner
2C1
Tuner
2C2
Tuner
2C
Test Generator
Synthesizer
DF converter
Processing unit 3

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5506588 A
- US 2015168562 A1